# EUROPÄISCHE PATENTSCHRIFT

(11) **EP 1 772 603 B1**
(45) Veröffentlichungstag und Bekanntmachung des Hinweises auf die Patenterteilung: **21.05.2008**
(21) Anmeldenummer: 06120635.5
(22) Anmeldetag: 14.09.2006
(51) Int. Cl.: F01N 7/14, B23K 33/00, F16L 13/04, F01N 3/28

(54) **Bauteil einer Abgasanlage**
Component of an exhaust system
Composant pour une dispositif d'échappement

(30) Priorität: 10.10.2005 DE 102005048909
(43) Veröffentlichungstag der Anmeldung: 11.04.2007
(73) Patentinhaber: J. Eberspächer GmbH & Co. KG, 73730 Esslingen (DE)
(72) Erfinder: Linsler, Rainer, 66740, Saarlouis (DE)
(74) Vertreter: Bongen, Renaud & Partner

(56) Entgegenhaltungen:
- DE-A1- 4 316 870
- JP-A- 58 062 310
- US-A1- 2005 207 948

## Beschreibung

Die vorliegende Erfindung betrifft ein Bauteil einer Abgasanlage für eine Brennkraftmaschine, insbesondere eines Kraftfahrzeugs, mit den Merkmalen des Oberbegriffs des Anspruchs 1.

Die hier betrachteten Bauteile sind im Betrieb der Brennkraftmaschine von Abgasen durchströmt. Im einfachsten Fall handelt es sich hierbei um abgasführende Rohre. Vorzugsweise handelt es sich jedoch um komplexere Komponenten einer Abgasanlage, wie z.B. Partikelfilter, Katalysator oder Schalldämpfer. Besagte Bauteile weisen in jedem Fall einen Rohrkörper auf, der entweder direkt zur Abgasführung dient oder der bei komplexeren Bauteilen als Gehäuse zur Unterbringung anderer Komponenten des Bauteils dient. Bekanntermaßen können die gasführenden Bereich einer Abgasanlage im Betrieb der Brennkraftmaschine sehr heiß werden. Um die thermische Belastung von benachbart zur Abgasanlage angeordneten Bauteilen, beispielsweise eines Fahrzeugs, zu reduzieren, ist es bekannt, die Abgasanlage zumindest teilweise zu isolieren. Zu diesem Zweck können die vorstehend genannten Bauteile der Abgasanlage mit einem Isolierkörper ausgestattet sein, der unter Ausbildung eines den Rohrkörper in Umfangsrichtung umschließenden, radial zwischen Rohrkörper und Isolierkörper angeordneten Ringraums außen am Rohrkörper angeordnet ist. Rohrkörper und Isolierkörper sind vorzugsweise aus Blech, insbesondere aus Stahlblech, hergestellt und können beispielsweise mittels wenigstens einer Schweißverbindung aneinander befestigt sein.

Aus der JP 58-062310 A ist ein Abgasrohr für ein Zweirad bekannt, das einen Rohrkörper und einen Isolierkörper aufweist. Der Isolierkörper ist unter Ausbildung eines den Rohrkörper in Umfangsrichtung umschließenden, radial zwischen Rohrkörper und Isolierkörper angeordneten Ringraums außen am Rohrkörper angeordnet. Der Isolierkörper ist zumindest an einem seiner axialen Enden mit wenigstens einer Schweißverbindung am Rohrkörper befestigt, wobei der Isolierkörper an diesem axialen Enden einen umgebogenen Randabschnitt aufweist. Die Schweißnaht ist dabei an der radial endenden, außenliegenden Stirnseite des umgebogenen Randabschnitts angeordnet.

Die vorliegende Erfindung beschäftigt sich mit dem Problem, für ein Bauteil der eingangs genannten Art eine verbesserte Ausführungsform aufzuzeigen, die sich durch eine hohe Lebensdauer sowie durch eine preiswerte Herstellbarkeit auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, ein axiales Ende des Isolierkörpers durch Umbiegen eines Randabschnitts zu verstärken, wobei gleichzeitig der umgebogene Randabschnitt in die wenigstens eine Schweißverbindung einbezogen wird. Zu diesem Zweck ist besagter Randabschnitt über einen Biegeabschnitt mit dem Endabschnitt des Isolierkörpers verbunden. Durch diese Bauweise ergibt sich für den Isolierkörper im Bereich seiner Anbindung an den Rohrkörper eine erhöhte Festigkeit, wodurch die Dauerhaltbarkeit des Bauteils vergrößert wird. Gleichzeitig lässt sich diese Verstärkung des Isolierkörpers ohne zusätzliches separates Bauteil und ohne zusätzlichen Fertigungsschritt erreichen. Die Kosten zur Realisierung des erfindungsgemäßen Bauteils sind somit vergleichsweise gering.

Vorzugsweise ist besagter Randabschnitt um etwa 180° umgebogen und zwar vorzugsweise so, dass er anschließend radial an einem Endabschnitt des Isolierkörpers anliegt, mit dem der Randabschnitt über einen Biegeabschnitt verbunden ist. Die Verstärkungswirkung des auf diese Weise umgebogenen oder zurückgebogenen Randabschnitts ist besonders ausgeprägt.

Bei einer Weiterbildung kann die Schweißverbindung, die vorzugsweise durch eine in Umfangsrichtung geschlossen umlaufende Schweißnaht gebildet ist, so angeordnet und dimensioniert werden, dass sie den Endabschnitt mit dem Rohrkörper und mit dem Randabschnitt verschweißt. Hierdurch ergibt sich eine besonders effektive Integration des verstärkten Endes des Isolierkörpers in die wenigstens eine Schweißverbindung. Die Festigkeit der Verbindung zwischen Isolierkörper und Rohrköper und somit die Dauerhaltbarkeit des Bauteils lässt sich dadurch verbessern.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,

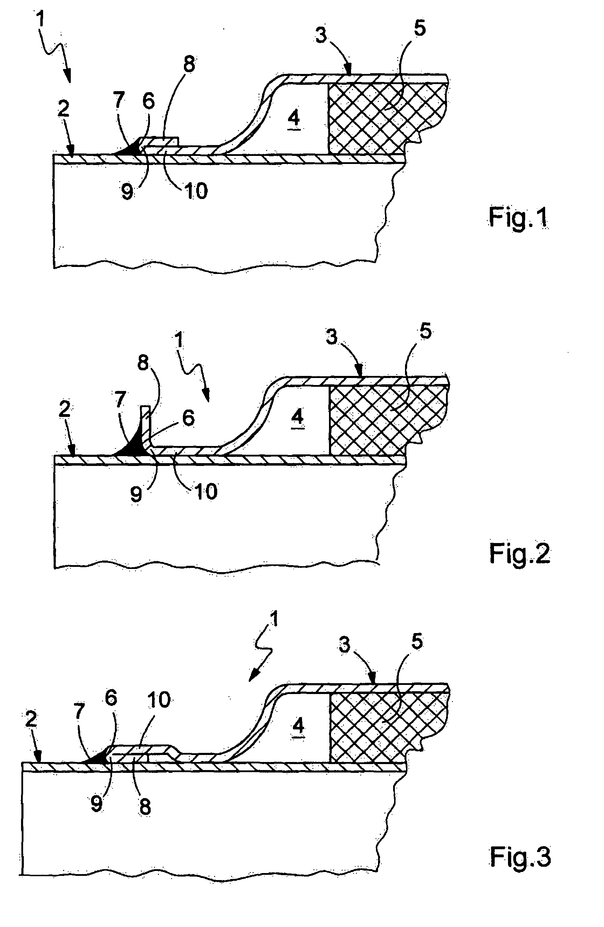

- Fig. 1 bis 3: jeweils einen stark vereinfachten Längsschnitt durch ein Bauteil einer Abgasanlage im Bereich einer Schweißverbindung, bei verschiedenen Ausführungsformen.

Entsprechend den Fig. 1 bis 3 umfasst ein erfindungsgemäßes Bauteil 1 einer im übrigen nicht dargestellten Abgasanlage einer ebenfalls nicht dargestellten Brennkraftmaschine einen Rohrköper 2 und einen Isolierkörper 3.

Beim Bauteil 1 kann es sich beispielsweise um ein abgasführendes Rohr der Abgasanlage handeln. In diesem Fall bildet der Rohrkörper 2 einen abgasführenden Leitungsabschnitt. Ebenso kann es sich beim Bauteil 1 um eine vergleichsweise komplexe Komponente der Abgasanlage handeln. Beispielsweise kann das Bauteil 1 als Katalysator oder als Partikelfilter oder als Schalldämpfer ausgestaltet sein. Der Rohrkörper 2 bildet dann ein Gehäuse, in dem weitere Komponenten des jeweiligen Bauteils 1 untergebracht sind, beispielsweise ein Partikelfilterelement, ein Katalysatorelement oder Schalldämpferkomponenten. Die Brennkraftmaschine, deren Abgase mit Hilfe der Abgasanlage abgeführt werden, ist vorzugsweise in einem Kraftfahrzeug angeordnet.

Der Isolierkörper 3 umschließt den Rohrkörper 2 in Umfangsrichtung, also in Richtung des Umfangs des Rohrkörpers 2. Dabei ist der Isolierkörper 3 außen am Rohrkörper 2 so angeordnet, dass sich radial zwischen dem Rohrkörper 2 und dem Isolierkörper 3 ein Ringraum 4 ausbildet. In diesem Ringraum 4 kann vorzugsweise ein Isolationsmaterial 5, beispielsweise in Form einer Isoliermatte, untergebracht sein.

Der Isolierkörper 3 ist am Rohrkörper 2 befestigt. Die Befestigung erfolgt zumindest an einem axialen Ende 6 des Isolierkörpers 3 mittels wenigstens einer Schweißverbindung 7.

Die folgenden Erläuterungen beziehen sich explizit nur auf das in den Fig. 1 bis 3 gezeigte axiale Ende 6 des Isolierköpers 3. Dabei ist implizit klar, dass der Isolierkörper 3 an seinem anderen, hier nicht gezeigten axialen Ende grundsätzlich auf die gleiche Weise ausgestaltet und am Rohrkörper 2 befestigt sein kann.

Der Isolierkörper 3 weist am gezeigten axialen Ende 6 einen umgebogenen Randabschnitt 8 auf. Hierdurch ergibt sich eine intensive Aussteifung des Isolierkörpers 3 im Bereich seines axialen Endes 6. Des weiteren ist die wenigstens eine Schweißverbindung 7 im Bereich dieses Randabschnitts 8 angeordnet. Das bedeutet, dass die wenigstens eine Schweißverbindung 7 im Bereich der mit Hilfe des umgebogenen Randabschnitts 8 erzielten Versteifung oder Verstärkung des Isolierkörpers 3 angeordnet ist.

Wesentlich für die preiswerte Bauweise des Bauteils 1 ist, dass der Randabschnitt 8 integraler Bestandteil des Isolierkörpers 3 ist.

Vorzugsweise ist die Schweißverbindung 7 eine Schweißnaht, die in Umfangsrichtung des Rohrkörpers 2 geschlossen umläuft.

Der umgebogene Randabschnitt 8 ist über einen Biegeabschnitt 9 mit einem Endabschnitt 10 des Isolierkörpers 3 verbunden. Der Biegeabschnitt 9 bildet dabei den Übergang zwischen dem umgebogenen Randabschnitt 8 und dem nichtgebogenen Endabschnitt 10. An diesem Biegeabschnitt 9 befindet sich dann das axiale Ende 6 des Isolierkörpers 3, so dass die wenigstens eine Schweißverbindung 7 zumindest den Biegeabschnitt 9 am Rohrkörper 2 befestigt.

Bei der in Fig. 1 gezeigten Ausführungsform ist der Randabschnitt 8 radial nach außen umgebogen, und zwar um etwa 180°. Des weiteren ist dieser Randabschnitt 8 in Fig. 1 soweit umgebogen, dass er anschließend radial am Endabschnitt 10 anliegt. Durch eine entsprechende Dimensionierung der wenigstens einen Schweißnaht 7 ergibt sich hierbei eine Art dreilagige Blechversteifung im Bereich der Schweißverbindung 7 zwischen dem Isolierkörper 3 und dem Rohrkörper 2. Die Schweißverbindung 7 bzw. die zwischen Rohrkörper 2 und Isolierkörper 3 hergestellte Befestigung zeichnet sich durch eine besonders hohe Steifigkeit aus.

Bei der in Fig. 2 gezeigten Ausführungsform ist der Randabschnitt 8 wieder radial nach außen umgebogen und zwar um etwa 90°. Die wenigstens eine Schweißverbindung 7 erstreckt sich dabei bis in den Randbereich 8. Auch hier wird eine deutliche Versteifung des Isolierkörpers 3 im Bereich der wenigstens einen Schweißverbindung 7 erreicht.

Bei der in Fig. 3 gezeigten Ausführungsform ist der Randabschnitt 8 radial nach innen umgebogen, und zwar vorzugsweise um etwa 180°. Die Umbiegung erfolgt auch hier so, dass der Randabschnitt 8 radial am Endabschnitt 10 anliegt. Demnach liegt auch hier im Bereich der wenigstens einen Schweißverbindung 7 eine dreilagige Blechstruktur vor, die sich durch eine erhöhte Steifigkeit auszeichnet.

Vorzugsweise sind die wenigstens eine Schweißverbindung 7 und die Abschnitte 8, 9, 10 am Ende 6 des Isolierkörpers 3 so aufeinander abgestimmt, dass die wenigstens eine Schweißverbindung 7 einerseits den Endabschnitt 10 indirekt über den Biegeabschnitt 9 oder direkt mit dem Rohrkörper 2 und andererseits den Endabschnitt 10 indirekt über den Biegeabschnitt 9 oder direkt mit dem Randabschnitt 8 verschweißt.

## Patentansprüche

1. Bauteil einer Abgasanlage für eine Brennkraftmaschine, insbesondere eines Kraftfahrzeugs,
- mit einem Rohrkörper (2) und
- mit einem Isolierkörper (3), der unter Ausbildung eines den Rohrkörper (2) in Umfangsrichtung umschließenden, radial zwischen Rohrkörper (2) und Isolierkörper (3) angeordneten Ringraums (4) außen am Rohrkörper (2) angeordnet ist,
- wobei der Isolierkörper (3) zumindest an einem seiner axialen Enden (6) mit wenigstens einer Schweißverbindung (7) am Rohrkörper (2) befestigt ist,
- wobei der Isolierkörper (3) an diesem axialen Ende (6) einen umgebogenen Randabschnitt (8) aufweist,
**dadurch gekennzeichnet,**
**dass** der Randabschnitt (8) über einen Biegeabschnitt (9) mit einem Endabschnitt (10) des Isolierkörpers (3) verbunden ist.

2. Bauteil nach Anspruch 1,
**dadurch gekennzeichnet,**
**dass** die wenigstens eine Schweißverbindung (7) den Biegeabschnitt (9) am Rohrkörper (2) befestigt.

3. Bauteil nach Anspruch 1 oder 2,
**dadurch gekennzeichnet,**
**dass** der Randabschnitt (8) radial am Endabschnitt (10) anliegt.

4. Bauteil nach einem der Ansprüche 1 bis 3,
**dadurch gekennzeichnet,**
**dass** die wenigstens eine Schweißverbindung (7) und die Abschnitte (8, 9, 10) am Ende (6) des Isolierkörpers (3) so aufeinander abgestimmt sind, dass die wenigstens eine Schweißverbindung (7) den Endabschnitt (10) indirekt über den Biegeabschnitt (9) oder direkt mit dem Rohrkörper (2) und indirekt über den Biegeabschnitt (9) oder direkt mit dem Randabschnitt (8) verschweißt.

5. Bauteil nach einem der Ansprüche 1 bis 4,
**dadurch gekennzeichnet,**
- **dass** die Schweißverbindung (7) eine in Umfangsrichtung geschlossen umlaufende Schweißnaht ist, und/oder
- **dass** die wenigstens eine Schweißverbindung (7) im Bereich des Randabschnitts (8) angeordnet ist.

6. Bauteil nach einem der Ansprüche 1 bis 5,
**dadurch gekennzeichnet,**
- **dass** der Randabschnitt (8) radial nach innen oder radial nach außen umgebogen ist, und/oder
- **dass** der Radialabschnitt (8) um etwa 180° umgebogen ist.

7. Bauteil nach einem der Ansprüche 1 bis 6,
**dadurch gekennzeichnet,**
- **dass** das Bauteil (1) ein abgasführendes Rohr ist, bei dem der Rohrkörper (2) zur Abgasführung dient, oder
- **dass** das Bauteil (1) ein Katalysator oder ein Partikelfilter oder ein Schalldämpfer ist, bei dem der Rohrkörper (2) als Gehäuse dient.

8. Bauteil nach einem der Ansprüche 1 bis 7,
**dadurch gekennzeichnet,**
**dass** im Ringraum (4) ein Isolationsmaterial (5) angeordnet ist.

9. Bauteil nach einem der Ansprüche 1 bis 8,
**dadurch gekennzeichnet,**
**dass** der Isolierkörper (3) an seinen beiden axialen Enden (6) jeweils einen solchen umgebogenen Randabschnitt (8) aufweist.

## Claims

1. A component of an exhaust system for an internal combustion engine, in particular in a motor vehicle
- having a tubular body (2) and
- having an insulation body (3), which is arranged on the outside of the tubular body (2), forming an annular space (4) surrounding the tubular body (2) in the circumferential direction, situated radially between the tubular body (2) and the insulation body (3),
- such that the insulation body (3) is attached to the tubular body (2) with at least one welded joint (7) on at least one of its axial ends (6),
- such that the insulation body (3) has a bent edge section (8) on this axial end (6),
**characterized in that**
the edge section (8) is connected to an end section (10) of the insulation body (3) by means of a bending section (9).

2. The component according to Claim 1,
**characterized in that**
the at least one welded joint (7) attaches the bending section (9) to the tubular body (2).

3. The component according to Claim 1 or 2,
**characterized in that**
the edge section (8) is in contact with the end section (10) radially.

4. The component according to any one of Claims 1 through 3,
**characterized in that**
the at least one welded joint (7) and the sections (8, 9, 10) on the end (6) of the insulation body (3) are coordinated with one another in such a way that the at least one welded joint (7) forms the weld connecting the end section (10) to the tubular body (2) either directly or indirectly via the bending section (9) and to the edge section (8) either directly or indirectly via the bending section (9).

5. The component according to any one of Claims 1 through 4,
**characterized in that**
- the welded joint (7) is a closed peripheral weld running peripherally in the circumferential direction and/or
- the at least one welded joint (7) is arranged in the area of the edge section (8).

6. The component according to any one of Claims 1 through 5,
**characterized in that** .
- the edge section (8) is curved radially inward or radially outward and/or
- the radial section (8) is bent by approximately 180°.

7. The component according to any one of Claims 1 through 6,
**characterized in that**
- the component (1) is an exhaust gas carrying pipe in which the tubular body (2) serves to carry the exhaust gas or
- the component (1) is a catalytic converter or a particulate filter or a muffler in which the tubular body (2) functions as a housing.

8. The component according to any one of Claims 1 through 7,
**characterized in that**
an insulation material (5) is provided in the annular space (4).

9. The component according to any one of Claims 1 through 8,
**characterized in that**
the insulation body (3) has such a bent edge section (8) on each of its two axial ends (6).

## Revendications

1. Composant d'une installation d'échappement pour un moteur à combustion interne, en particulier d'un véhicule, comprenant
- un corps de tube (2) et
- un corps isolant (3), qui est disposé à l'extérieur sur le corps de tube (2) en formant un espace annulaire (4) entourant le corps de tube (2) dans le sens périphérique et disposé radialement entre le corps de tube (2) et le corps isolant (3),
- le corps isolant (3) étant fixé au moins sur l'une de ses extrémités (6) axiales avec au moins une liaison soudée (7) sur le corps de tube (2),
- le corps isolant (3) présentant une partie de bordure (8) repliée sur cette extrémité (6) axiale,
**caractérisé en ce que**
la partie de bordure (8) est reliée par une partie de cintrage (9) à une partie d'extrémité (10) du corps isolant (3).

2. Composant selon la revendication 1,
**caractérisé en ce que**
la au moins une liaison soudée (7) fixe la partie de cintrage (9) sur le corps de tube (2).

3. Composant selon la revendication 1 ou 2,
**caractérisé en ce que**
la partie de bordure (8) s'appuie radialement sur la partie d'extrémité (10).

4. Composant selon l'une quelconque des revendications 1 à 3,
**caractérisé en ce que** la au moins une liaison soudée (7) et les parties (8, 9, 10) sur l'extrémité (6) du corps isolant (3) sont coordonnées de telle sorte que la au moins une liaison soudée (7) soude la partie d'extrémité (10) indirectement par la partie de cintrage (9) ou directement avec le corps de tube (2) et indirectement par la partie de cintrage (9) ou directement avec la partie de bordure (8).

5. Composant selon l'une quelconque des revendications 1 à 4,
**caractérisée en ce que**
- la liaison soudée (7) est un cordon de soudure tournant fermé dans le sens périphérique, et/ou
- **en ce que** la au moins une liaison soudée (7) est disposée dans la zone de la partie de bordure (8).

6. Composant selon l'une quelconque des revendications 1 à 5,
**caractérisé en ce que**
- la partie de bordure (8) est repliée radialement vers l'intérieur ou radialement vers l'extérieur, et/ou
- **en ce que** la partie de bordure (8) est repliée d'environ 180°.

7. Composant selon l'une quelconque des revendications 1 à 6,
**caractérisé en ce que**
- le composant (1) est un tube véhiculant des gaz brûlés, sur lequel le corps de tube (2) sert au guidage des gaz brûlés, ou
- **en ce que** le composant (1) est un catalyseur ou un filtre à particules ou un silencieux, sur lequel le corps de tube (2) sert de boîtier.

8. Composant selon l'une quelconque des revendications 1 à 7,
**caractérisé en ce que**
un matériau d'isolation (5) est disposé dans l'espace annulaire (4).

9. Composant selon l'une quelconque des revendications 1 à 8,
**caractérisé en ce que**
le corps isolant (3) présente une telle partie de bordure (8) repliée sur chacune de ses deux extrémités (6) axiales.
